Europäisches Patentamt

European Patent Office

Office européen des brevets

(19)

(11) Publication number: **0 109 250 B1**

(12) **EUROPEAN PATENT SPECIFICATION**

(45) Date of publication of patent specification: **11.03.92** (51) Int. Cl.5: **G05D 23/275**

(21) Application number: **83306796.0**

(22) Date of filing: **08.11.83**

(54) **Thermostat device.**

(30) Priority: **12.11.82 US 440689**

(43) Date of publication of application:
**23.05.84 Bulletin 84/21**

(45) Publication of the grant of the patent:
**11.03.92 Bulletin 92/11**

(84) Designated Contracting States:
**DE FR GB NL**

(56) References cited:
| | |
|---|---|
| BE-A- 449 404 | DE-A- 3 109 911 |
| US-A- 1 858 622 | US-A- 2 011 970 |
| US-A- 3 631 472 | US-A- 4 047 241 |

(73) Proprietor: **HONEYWELL INC.**
**Honeywell Plaza**
**Minneapolis Minnesota 55408(US)**

(72) Inventor: **Kompelien, Arlon D.**
**6329 Thomas Avenue South**
**Richfield Minnesota 55423(US)**

(74) Representative: **Fox-Male, Nicholas Vincent**
**Humbert**
**Honeywell Control Systems Limited Charles**
**Square**
**Bracknell Berkshire RG12 1EB(GB)**

Rank Xerox (UK) Business Services

## Description

In recent years electromechanical types of thermostats using a bimetal as a temperature sensor have been replaced by electronic thermostats. Electronic thermostats presently use a thermistor as a temperature sensor or input. This requires calibration by adjustment of resistors in a bridge circuit. The setpoint is normally provided for this thermostat by adjusting the position of a mechanical wiper of a variable resistor. There is serious concern that the variable resistor used for the setpoint remains stable. The wiping action over a long period of time could possible change the resistance value and thereby the reliability of the calibration.

Also, the calibration of the thermostat must be sufficiently accurate so that no noticeable discrepancies occur between the control point temperature, and the normal bimetal temperature indicator that is usually used with this type of thermostat.

According to the present invention, there is provided a thermostat device comprising temperature control means, including temperature indicia means, operable to control the temperature of a space in which the thermostat device is positioned, a temperature sensing means sensing the temperature of said space, and an electronic circuit responsive to the temperature control and sensing means to provide an output depending on the balance of the circuit, characterized in that the temperature control means includes a movable member (10) having two electrically conductive areas (11 and 12) separated by a non-conductive area (13), the member 10 also having a projection (14) cooperating with the temperature indicia means (23), in that an alternating current source (24) is electrically connected to and across said areas, and in that the temperature sensing means (30) is mounted adjacent member (10) and has a conductive pointer (31) movable over areas (11,12) to define two differentially variable capacitors (33,34), the electronic circuit (41) providing an output indicative of the balance or otherwise of the capacitors.

An embodiment of the invention will now be described, by way of example, with reference to the accompanying drawings, in which:-

Figure 1 is a plan view of the rotatable indulating member of a thermostat according to the present invention,

Figure 2 is a side view of Figure 1, and;

Figure 3 is a schematic drawing of the mechanical assembly and electronics of a mechanically controlled electronic thermostat of the present invention.

Referring to the drawings, the thermostat device 19 includes an insulating member 10 which is rotatable about axis 17 and which may be manufactured from any type of insulating material, such as a plastics or a ceramic material. The member has two conductive part-circular plates or areas 11 and 12 placed on the insulating member 10, and these two conductive members 11 and 12 are separated by a nonconductive area 13. The electrically conductive areas 11 and 12 may be plated onto the member 10 or may be individual conductive areas that are cemented or otherwise attached in place on the insulating member 10. The member 10 further has a projection 14 that serves two different functions, as a temperature indicator and at the same time as a convenient handle or member for adjusting the member 10.

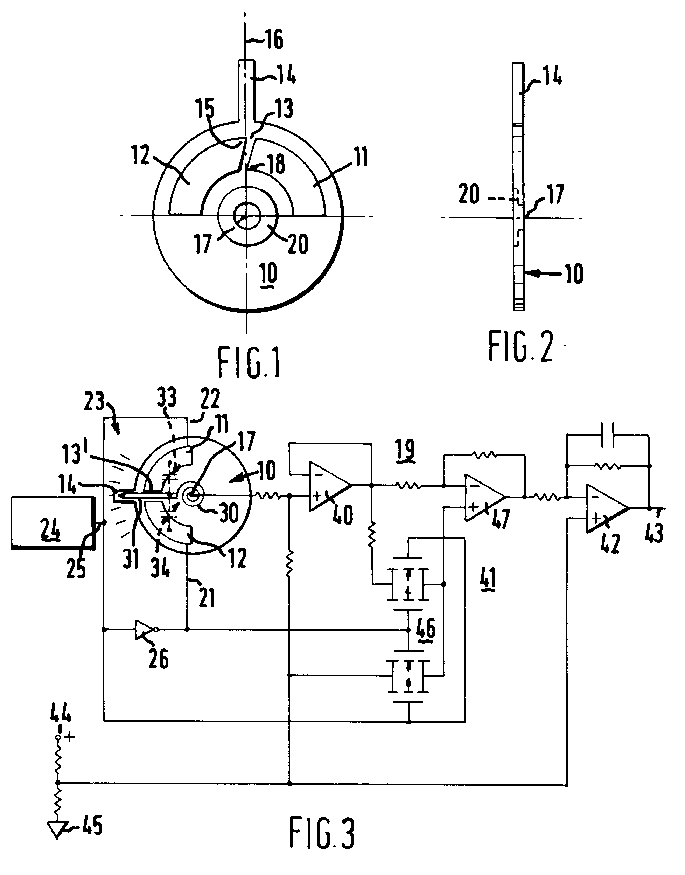

The nonconductive area 13 has been specifically shown (see Figure 1) as a sloped nonconductive area between the conductive areas 11 and 12. The slope of the slot 13 between the two conductive areas 11 and 12 can be adjusted according to the amount of proportional control desired for the present thermostat device.

Member 10 includes a recessed portion 20 (see Figure 2) which provides a friction bearing support to a bimetal assembly which will be described with reference to Figure 3.

Referring to Figure 3, conductors 21 and 22 (which may be flexible conductors or slide conductors) are in electrical contact with the conductive areas 11 and 12, of member 10, and are such as to allow the member 10 to rotate about its axis 17 whenever the temperature setpoint indicator 14 is manually adjusted with respect to temperature indicia 23 in either degree Fahrenheit or degrees Centigrade.

The conductors 21 and 22 are connected to an oscillator 24 which has an output conductor 25 that is common to the conductor 22, and is connected to the conductor 21 through a NOT gate 26 so that the voltage from the oscillator to conductor 21 is inverted. With the arrangement disclosed the oscillator 24 is capable of supplying the conductive areas 11 and 12 with alternating current voltages of opposite polarity. The oscillator 24 typically would be part of the electronics or power supply contained within the thermostat 19.

Also supplied within the thermostat 19 is a bimetal element 30 having a spiral configuration, and a pointer 31 that acts as a temperature responsive means that is physically able to move adjacent to and in a plane parallel to the conductive areas 11 and 12. It will be understood that as the temperature changes, the bimetal element 30, which is anchored at the center of axis 17, allows the pointer 31 to angular rotate by an amount depending on the temperature sensed. In the position disclosed, the pointer 31 is centered over the nonconductive area 13', which in this example is shown as a nonskewed slot. This is done for clarity sake. In a real device, the nonconductive area 13' would be slanted to provide the proportional band, as disclosed in Figure 1.

The circuit of Figure 3 will include a first air dielectric type of capacitor 33 defined by the capacitance between the metallic pointer 31 and the conductive area 11. A second air dielectric capacitor 34 is also defined between the same conductive portion of the pointer 31 and the second conductive area 12. Both capacitors are differentially variable as the rotatable member 10 is moved with respect to the bimetal element 30.

It can be seen that by moving the projection 14 it is possible to upset the even distribution of capacitance that is exemplified in Figure 3. This unbalance can occur whenever the bimetal element 30 is activated by a temperature change which moves the pointer 31 with respect to the position shown.

The thermostat 19 is completed by an amplifier 40, and a demodulator and phase discriminator 41. Four metal oxide semiconductor transistors 46 provide a single pole, double throw switching action controlling the potential applied to the positive input of an amplifier 47. This switching action is controlled by the same oscillator driving the sensing capacitor members so the output of amplifier 47 becomes a direct current potential whose value is dependent on the unbalance of the capacitance values. This direct current signal of the phase discriminator is again amplified at 42 to provide an output signal from the output 43 of the electronic circuit which is indicative of the degree of unbalance of the capacitors 33 and 34 and which is used to control a conventional heating or cooling system. The device is completed by a power source 44 that is grounded at 45. The power source 44 would be common in the electronic thermostat to the source or power supply for the oscillator 24.

Instead of being rotatably mounted, member 10 may be moved in a rectilinear manner and may be rectangular in configuration with conductive areas 11 and 12 being rectangular in shape separated by the nonconductive area 13. In addition, the bimetal element may have a linkage that provides a rectilinear motion for the pointer 31.

In the present device, the setpoint projection 14 and the pointer 31 use the same temperature scale or indicia 23. With this approach to the design no problem arises of tracking of the setpoint and the temperature indicator pointer. Also, with the use of a capacitive coupling there is no mechanical wiping action required and hence no wear occurs that could subject the thermostat to a mechanical failure of a change in calibration. It is noted that once the calibration of the bimetal element is provided, the calibration for the temperature control is complete. Due to the nature of the electronics in the present device, it is capable of low cost integration and therein a mechanically controlled electronic thermostat of very simple and inexpensive design has been provided.

## Claims

1. A thermostat device comprising temperature control means, including temperature indicia means, operable to control the temperature of a space in which the thermostat device is positioned, a temperature sensing means sensing the temperature of said space, and an electronic circuit responsive to the temperature control and sensing means to provide an output depending on the balance of the circuit, characterized in that the temperature control means includes a movable member (10) having two electrically conductive areas (11 and 12) separated by a non-conductive area (13), the member 10 also having a projection (14) cooperating with said temperature indicia means (23), in that an alternating current source (24) is electrically connected to and across said areas, and in that the temperature sensing means (30) is mounted adjacent member (10) and has a conductive pointer (31) movable over areas (11,12) to define two differentially variable capacitors (33,34), the electronic circuit (41) providing an output indicative of the balance or otherwise of the capacitors.

2. The device of Claim 1, characterized in that the temperature sensing means (30) is provided by a bimetal element which cooperates with the temperature indicia means (23) to indicate the temperature sensed by the device.

3. The device of Claim 1 or 2, characterized in that the non-conductive area (13) extends in a direction which is angled with respect to the direction of movement of the pointer (31) whereby to provide a proportional control band for the device.

4. The device of Claim 1, 2 or 3, characterized in that the movable member (10) is rotatably mounted and in that the temperature sensing means (30) is a spiral bimetal element anchored at the centre of rotation of the movable member (10).

## Revendications

1. Un dispositif thermostatique comprenant des moyens de réglage de température, avec des moyens formant repères de température, utilisable pour régler la température dans un espace ou environnement dans lequel le dispositif thermostatique est installé, des moyens de détection de température captant la température dudit espace, et un circuit électronique sensible aux moyens de réglage et de détection de la température, pour émettre un signal de sortie en fonction de l'équilibre du circuit, caractérisé en ce que les moyens de réglage de température comprennent un élément ou équipage mobile (10) comportant deux zones électroconductrices (11 et 12) séparées par une zone non-conductrice (13), l'élément (10) comprenant également une saillie (14) coopérant avec lesdits moyens formant repères de température (23), de manière à raccorder électriquement une source de courant alternatif (24) auxdites zones et au travers de celles-ci, et en ce que les moyens de détection de température (30) sont montés à proximité de l'élément (10) et comprennent un index conducteur (31) mobile sur les zones (11, 12) pour définir deux condensateurs variables différentiellement (33, 34), le circuit électronique (41) émettant un signal de sortie indiquant l'équilibre ou le déséquilibre des condensateurs.

2. Le dispositif selon la revendication 1, caractérisé en ce que les moyens de détection de température (30) sont pourvus d'un élément bimétallique qui coopère avec des moyens formant repère de température (23) pour indiquer la température détectée par le dispositif.

3. Le dispositif selon la revendication 1 ou 2, caractérisé en ce que la zone non-conductrice (13) s'étend dans une direction angulaire par rapport à la direction du déplacement de l'index (31), de manière à former une bande de réglage proportionnelle du dispositif.

4. Le dispositif selon la revendication 1, 2 ou 3, caractérisé en ce que l'élément mobile (10) est monté à rotation et en ce que les moyens de détection de température (30) sont un élément bimétallique en spirale, ancré sur le centre de rotation de l'élément mobile (10).

**Patentansprüche**

1. Thermostateinrichtung mit einer Temperatursteuereinrichtung einschließlich einer Temperaturanzeigevorrichtung zum Steuern der Temperatur eines Raums, in dem die Thermostateinrichtung angeordnet ist, einem Temperaturfühler für die Temperatur des Raums sowie einer auf die Temperatursteuereinrichtung und den Temperaturfühler ansprechenden elektronischen Schaltung, die ein vom Abgleich der Schaltung abhängiges Ausgangssignal liefert, **dadurch gekennzeichnet,** daß die Temperatursteuereinrichtung ein bewegliches Bauteil (10) mit zwei voneinander durch einen nicht leitenden Bereich (13) getrennten elektrisch leitenden Bereichen (11, 12) sowie einen mit der Temperaturanzeigevorrichtung (23) zusammenwirkenden Ansatz (14) aufweist;
daß eine Wechselspannungsquelle (24) an und über die Bereiche angeschlossen ist; und
daß der Temperaturfühler (30) benachbart zum Bauteil (10) angebracht ist und einen über die Bereiche (11, 12) bewegbaren leitfähigen Zeiger (31) aufweist, mit dem zwei differentiell veränderbare Kondensatoren (33, 34) gebildet sind und wobei die elektrische Schaltung (41) ein vom Abgleich oder anderweit von den Kondensatoren abhängiges Ausgangssignal liefert.

2. Einrichtung nach Anspruch 1, **dadurch gekennzeichnet,** daß der Temperaturfühler (30) ein Bimetall-Element ist, welches mit der Temperaturanzeigevorrichtung (23) zur Anzeige der von der Einrichtung gemessenen Temperatur zusammenwirkt.

3. Einrichtung nach Anspruch 1 oder 2, **dadurch gekennzeichnet,** daß sich der nicht leitende Bereich (13) in einer Richtung erstreckt, die gegenüber der Richtung der Bewegung des Zeigers (31) um einen Winkel geneigt ist, wodurch für die Steuereinrichtung ein Proportional-Steuerband entsteht.

4. Einrichtung nach Anspruch 1, 2 oder 3, **dadurch gekennzeichnet,** daß das bewegliche Bauteil (10) drehbar gehalten und der Temperaturfühler (30) ein spiralförmiges Bimetall-Element ist, welches im Drehpunkt des beweglichen Bauteils (10) verankert ist.

FIG.1

FIG.2

FIG.3